# EUROPÄISCHE PATENTSCHRIFT

(11) **EP 1 163 137 B1**
(45) Veröffentlichungstag und Bekanntmachung des Hinweises auf die Patenterteilung: **14.09.2005**
(21) Anmeldenummer: 00916796.6
(22) Anmeldetag: 03.03.2000
(51) Int. Cl.: B60T 8/36

(54) **VENTIL, INSBESONDERE FÜR SCHLUPFGEREGELTE HYDRAULISCHE BREMSANLAGEN VON KRAFTFAHRZEUGEN**
VALVE, ESPECIALLY FOR SLIP-CONTROLLED HYDRAULIC BRAKE SYSTEMS INSTALLED IN MOTOR VEHICLES
SOUPAPE, EN PARTICULIER POUR INSTALLATIONS DE FREINAGE HYDRAULIQUES A REGULATION ANTIPATINAGE DE VEHICULES AUTOMOBILES

(30) Priorität: 09.03.1999 DE 19910207
(43) Veröffentlichungstag der Anmeldung: 19.12.2001
(73) Patentinhaber: ROBERT BOSCH GMBH, 70442 Stuttgart (DE)
(72) Erfinder: MAYER, Franz, D-87490 Haldenwang (DE)
(86) Internationale Anmeldenummer: PCT/DE2000/000684
(87) Internationale Veröffentlichungsnummer: WO 2000/053474

(56) Entgegenhaltungen:
- WO-A-00/18628
- WO-A-98/09855
- DE-A- 3 024 435
- DE-A- 4 030 963
- DE-A- 4 337 435

## Beschreibung

### Stand der Technik

Die Erfindung geht aus von einem Ventil nach der Gattung des Patentanspruchs 1.

Es ist schon ein solches Ventil aus der DE 43 37 435 A1 bekannt. Das Ventil weist eine Hülse für einen Anker und einen Magnetkern auf. Die Hülse erstreckt sich durch eine Buchse. Diese weist innenumfangsseitig eine umlaufende Ausnehmung auf, in welche die Hülse mit einer umlaufenden, sickenförmigen Aufweitung ihrer Mantelwand eingreift. Hierdurch ist die Hülse an der Buchse axial befestigt. Die Buchse wiederum ist mit einem radial nach außen verlaufenden Flansch versehen. Dieser greift zusammen mit einem Abschnitt der Hülse in eine Bohrung eines Ventilblocks ein. Durch vom mundungsseitigen Umfang der Bohrung verdrängten Werkstoff des Ventilblocks ist die Buchse mittels ihres Flansches fluiddicht am Ventilblock befestigt. Um die Verbindung zwischen Hülse und Buchse abzudichten, sind in der Bohrung ein am Flansch der Hülse anliegender Stützring und ein Dichtring vorgesehen, welcher einerseits an der Hülse und andererseits am Innenumfang der Bohrung angreift.

Das bekannte Ventil hat den Nachteil, daß die Hülse mit dem kostenaufwendigen Zwischenteil Buchse am Ventilblock befestigt und die Verbindung zwischen der Hülse und der Buchse nicht dicht ist und daher eine kostenaufwendige Abdichtung zwischen Stützring und Dichtring erfordert.

Aus DE 30 24 435 A1 ist ein Ventil mit einer Hülse für einen Anker bekannt. Die Hülse hat eine Aufweitung für den Angriff einer Überwurfmutter, mit der die Hülse gegen einen Dichtring niedergehalten ist.

### Vorteile der Erfindung

Das erfindungsgemäße Ventil mit den Merkmalen des Patentanspruchs 1 hat demgegenüber den Vorteil, daß zusätzliche Maßnahmen zur Abdichtung der Hülse entbehrlich sind und Bauteile zur Befestigung der Hülse in der Bohrung des Ventilblocks nicht benötigt werden, weil die Hülse eine Formgebung aufweist, welche deren unmittelbare Befestigung in der Bohrung des Ventilblocks erlaubt. Dabei bilden die ebenen Wandabschnitte des an der Hülse ausgebildeten Flansches Dichtflächen, von denen die eine an einer Stufe der Bohrung flächig abgestützt und die andere vom Werkstoff des Ventilblocks fluiddicht übergriffen ist. Durch die Ausbildung des Flansches als zwischenraumlose Faltung ist die Wandstärke des Flansches an seiner Einspannstelle in der Bohrung des Ventilblocks verdoppelt, was sich günstig auf die Einspannsteifigkeit und -festigkeit auswirkt.

Durch die in den Unteransprüchen aufgeführten Maßnahmen sind vorteilhafte Weiterbildungen und Verbesserungen des im Patentanspruch 1 beschriebenen Ventils möglich.

Mit der Ausgestaltung des Ventils nach Anspruch 2 ist im Vergleich zum bekannten Ventil, welches einen Ventilkörper mit Ventilsitz in der Hülse aufweist, eine weitere Reduzierung der Teilezahl erzielt.

Die im Anspruch 3 angegebene Maßnahme ist insofern vorteilhaft, als mit dem Filterelement neben einer Zwangsleitung des Fluids durch die Filteröffnungen eine zu- und abströmseitige Trennung der Strömungswege zum beziehungsweise vom Ventilsitz erzielt ist.

### Zeichnung

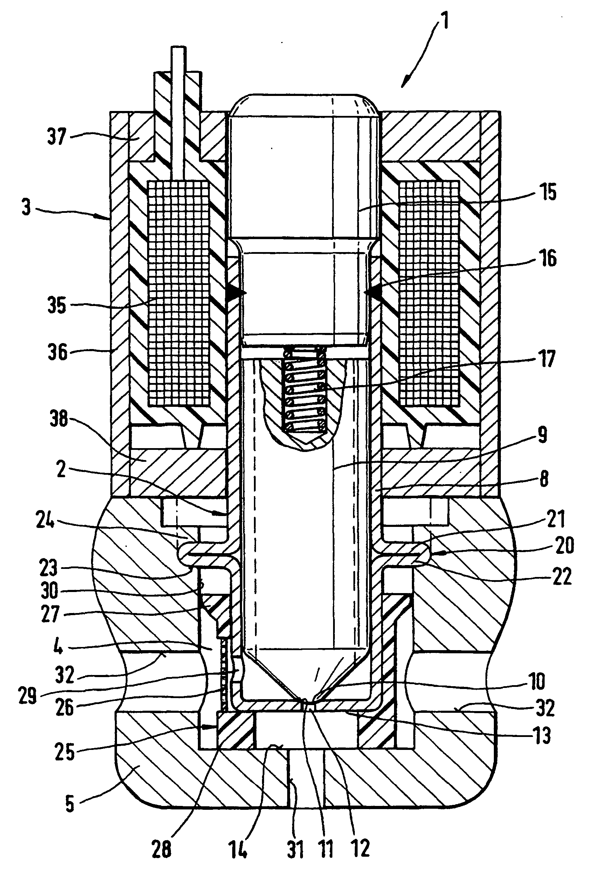

Ein Ausführungsbeispiel der Erfindung ist in der Zeichnung anhand eines Längsschnitts eines elektromagnetisch betätigten Ventils dargestellt und in der nachfolgenden Beschreibung näher erläutert.

### Beschreibung des Ausführungsbeispiels

Ein in der Zeichnung dargestelltes elektromagnetisch betätigtes Ventil 1, nachfolgend als Magnetventil bezeichnet, besteht im wesentlichen aus zwei Baugruppen, nämlich einem fluidführenden Teil 2, nachfolgend Hydraulikteil genannt, und einem Elektrikteil 3. Der Hydraulikteil 2 ist zu einem Teil seiner Länge in einer Bohrung 4 eines Ventilblocks 5 aufgenommen. Auf den aus dem Ventilblock 5 herausragenden Hydraulikteil 2 ist der Elektrikteil 3 aufgesteckt. Das als 2/2-Wegeventil ausgebildete Magnetventil 1 ist beispielsweise Bestandteil eines nicht dargestellten Hydraulikaggregats für schlupfgeregelte hydraulische Bremsanlagen von Kraftfahrzeugen.

Der Hydraulikteil 2 weist eine dünnwandige Hülse 8 auf, in welcher ein längsbewegbar geführter Anker 9 aufgenommen ist. Dieser läuft an seinem in der Zeichnung untenliegenden Endabschnitt kegelförmig zu und endet in einem kugelförmig ausgebildeten Schließkörper 10. Dem Schließkörper 10 ist ein Ventilsitz 11 zugeordnet, der eine mit der Ventillängsachse koaxiale Öffnung 12 in einem ebenen Boden 13 der Hülse 8 umschließt. Der Boden 13 der Hülse 8 erstreckt sich mit Abstand über einem Boden 14 der Ventilblockbohrung 4. Bodenabgewandt ist die Hülse 8 durch einen teilweise in diese eingreifenden Magnetkern 15 verschlossen. Der Magnetkern 15 ist mit der Hülse 8 durch eine umlaufende Schweißnaht 16 fluiddicht verbunden. In der Hülse 8 ist ferner eine Rückstellfeder 17 aufgenommen, welche sich einerseits am Anker 9 und andererseits am Magnetkern 15 abstützt. In der gezeichneten Grundstellung des Magnetventils 1 hält der Schließkörper 10 am Anker 9 die Öffnung 12 des Hülsenbodens 13 geschlossen.

Die Hülse 8 ist mit Abstand zu ihrem Boden 13 zu einem radial auswärts gerichteten, umlaufenden Flansch 20 aufgeweitet. Der Flansch 20 ist als eine Faltung der Hülse 8 ausgebildet und besitzt zwei ebene, sich quer zur Ventillängsachse erstreckende Wandabschnitte 21 und 22, welche im wesentlichen ohne Zwischenraum aneinander anliegen und mit Übergängen kleinen Radius ineinander beziehungsweise in den hohlzylindrischen Teil der Hülse 8 oberhalb und unterhalb des Flansches übergehen. Der Flansch 20 der Hülse 8 ist durch Umformen, zum Beispiel durch eine Stauchung der Hülse erzeugt. Die Hülse 8 ist mittels des Flansches 20 in der Bohrung 4 des Ventilblocks 5 befestigt. Hierzu ist die Bohrung 4 mündungsseitig mit einer Stufe 23 versehen, deren in der Zeichnung strichpunktiert angedeuteter Außendurchmesser demjenigen des Flansches 20 entspricht. Der Flansch 20 der Hülse 8 ist flächig mit seinem Wandabschnitt 22 an der Stufe 23 der Bohrung 4 abgestützt. Durch Werkstoffverdrängung vom mündungsseitigen Umfang der Bohrung 4 ist der andere Wandabschnitt 21 des Flansches 20 von einem umlaufenden Werkstoffwulst 24 hydraulisch dicht übergriffen. Flansch 20 und Werkstoffwulst 24 bilden das alleinige Befestigungsmittel des Hydraulikteils 2 am Ventilblock 5.

Auf den sich zwischen dem Flansch 20 und dem Boden 13 erstreckenden Abschnitt der Hülse 8 ist ein becherförmiges Filterelement aus Kunststoff aufgesteckt. Dieses weist umfangsseitig Filteröffnungen 26 und flanschseitig sowie hülsenbodenseitig jeweils einen Ringbund 27 beziehungsweise 28 auf. Die Filteröffnungen 26 des Filterelements 25 sind einem Durchbruch 29 der Hülse 8 zugeordnet, welcher zwischen dem Boden 13 und dem Flansch 20 angeordnet ist und als Ventileinlaß oder Ventilauslaß dient. Der flanschseitige Ringbund greift einerseits an der Hülse 8 zwischen dem Durchbruch 29 und dem Flansch 20 sowie andererseits an einer Umfangswand 30 der Ventilblockbohrung 4 an. Der andere Ringbund 28 greift hydraulisch dicht am Boden 13 der Hülse 8 sowie am Boden 14 der Bohrung 4 an. Der Ringbund 28 trennt außerdem Kanäle 31 und 32 des Ventilblocks 5, welche bodenseitig und umfangsseitig in die Ventilblockbohrung 4 münden und fluidführend mit der Öffnung 12 beziehungsweise dem Durchbruch 29 der Hülse 8 kommunizieren.

Der auf den Hydraulikteil 2 aufgesteckte Elektrikteil 3 besteht im wesentlichen aus einer elektrischen Spule 35, welche umfangsseitig von einem flußleitenden Spulengehäuse 36 und stirnseitig von flußleitenden Ringscheiben 37 und 38 umhüllt ist. Durch Erregung der elektrischen Spule 35 wird ein auf die magnetisch wirksamen Elemente Anker 9 und Magnetkern 15 der Spule 8 einwirkendes Magnetfeld erzeugt, aufgrund dessen der Anker 9 entgegen der Kraft der Rückstellfeder 17 an den Magnetkern 15 angezogen wird und der Schließkörper 10 des Ankers die Öffnung 12 am Boden 13 der Hülse 8 freigibt. Fluid kann vom Kanal 32 durch den Durchbruch 29 und die Öffnung 12 der Hülse 8 zum Kanal 31 strömen oder umgekehrt. Durch Abschaltung der Erregung der Spule 35 fällt der Anker 9 unter der Wirkung der Rückstellfeder 17 vom Magnetkern 15 ab, so daß der Schließkörper 10 des Ankers 9 die Öffnung 12 am Boden 13 der Hülse 8 absperrt.

## Patentansprüche

1. Elektromagnetisch betätigtes Ventil (1), insbesondere für schlupfgeregelte hydraulische Bremsanlagen von Kraftfahrzeugen, mit einer magnetisch wirksame Elemente, wie Anker (9) und Magnetkern (15), des fluidführenden Teils (2) des Ventils (1) enthaltenden Hülse (8), welche eine radial auswärts gerichtete, umlaufende Aufweitung aufweist, an der die Hülse (8) befestigt ist, sowie mit einem Flansch (20) für die Befestigung des fluidführenden Teils (2) des Ventils (1) in einer Bohrung (4) eines Ventilblocks (5), wobei der radial verlaufende Flansch (20) an einer Stufe (23) der Bohrung (4) abgestützt und mit vom Bohrungsumfang verdrängtem Werkstoff hydraulisch dicht übergriffen ist,
**dadurch gekennzeichnet,**
**daß** der radial verlaufende Flansch (20) von der Aufweitung der Hülse (8) gebildet ist und ebene, sich quer zur Ventillängsachse erstreckende Wandabschnitte (21, 22) aufweist, welche im wesentlichen ohne Zwischenraum aneinander anliegen.

2. Ventil nach Anspruch 1, **dadurch gekennzeichnet, daß** die Hülse (8) einen Boden (13) hat, in welchem eine mit der Ventillängsachse koaxiale Öffnung (12) mit Ventilsitz (11) ausgebildet ist, während ein umfangsseitig an der Hülse (8) zwischen dem Boden (13) und dem Flansch (20) angeordneter Durchbruch (29) als Ventileinlaß oder Ventilauslaß vorgesehen ist.

3. Ventil nach Anspruch 2, **dadurch gekennzeichnet, daß** auf den bodenseitigen Abschnitt der Hülse (8) ein becherförmiges Filterelement (25) aufgesteckt ist, welches umfangsseitig Filteröffnungen (26) und flanschseitig sowie hülsenbodenseitig jeweils einen Ringbund (27, 28) aufweist, von denen der flanschseitige Ringbund (27) zum Angriff an der Hülse (8) zwischen dem Durchbruch (29) und dem Flansch sowie der Umfangswand (30) der Ventilblockbohrung (4) vorgesehen ist, während der andere Ringbund (28) hydraulisch dicht am Boden (13) der Hülse (8) sowie am Boden (14) der Ventilblockbohrung (4) angreift, in welche bodenseitig mit der Öffnung (12) der Hülse (8) sowie umfangsseitig mit dem Durchbruch (29) kommunizierende, fluidführende Kanäle (31, 32) des Ventilblocks (5) münden.

## Claims

1. Electromagnetically actuated valve (1), in particular for slip-controlled hydraulic brake systems installed in motor vehicles, having a sleeve (8), which contains magnetically active elements, such as armature (9) and magnet core (15), of the fluid-carrying part (2) of the valve (1) and which has a radially outwardly oriented, continuously encircling widening, at which the sleeve (8) is secured, and having a flange (20) for securing the fluid-carrying part (2) of the valve (1) in a bore (4) in a valve block (5), the radially running flange (20) being supported against a step (23) in the bore (4), while material displaced from the circumference of the bore engages over it in a hydraulically sealed manner, **characterized in that** the radially running flange (20) is formed by the widening of the sleeve (8) and has planar wall sections (21, 22), which extend transversely with respect to the valve longitudinal axis and bear against one another substantially without any space between them.

2. Valve according to Claim 1, **characterized in that** the sleeve (8) has a base (13), in which an opening (12) with valve seat (11), the opening being coaxial with the valve longitudinal axis, is formed, while an aperture (29), which is arranged on the circumferential side of the sleeve (8), between the base (13) and the flange (20), is provided as valve inlet or valve outlet.

3. Valve according to Claim 2, **characterized in that** a cup-shaped filter element (25) is fitted onto the base-side section of the sleeve (8), which filter element has filter openings (26) on the circumferential side and has an annular collar (27, 28) on both the flange side and the sleeve base side, of which annular collars the annular collar (27) on the flange side is intended to engage against the sleeve (8) between the aperture (29) and the flange, and also against the circumferential wall (30) of the valve block bore (4), while the other annular collar (28) engages in a hydraulically sealed manner against the base (13) of the sleeve (8) and against the base (14) of the valve block bore (4), into which fluid-carrying passages (31, 32) of the valve block (5), which are in communication with the opening (12) in the sleeve (8) on the base side and with the aperture (29) on the circumferential side, open out.

## Revendications

1. °) Soupape (1) actionnée électromagnétiquement, notamment pour des systèmes de freinage hydrauliques à régulation antipatinage de véhicules automobiles, comprenant une douille (8) qui contient des éléments efficaces magnétiquement, tels qu'un induit (9) et un noyau d'aimant (15) de la partie conductrice de fluide (2) de la soupape (1), et qui présente un évasement périphérique orienté radialement vers l'extérieur auquel la douille (8) est fixée, et une bride (20) pour fixer la partie conductrice de fluide (2) de la soupape (1) dans un alésage (4) d'un bloc de soupape (5), la bride (20) s'étendant radialement prenant appui sur un palier (23) de l'alésage (4) et étant recouverte de façon hydraulique et étanche par le matériau déplacé de la périphérie de l'alésage,
**caractérisée en ce que**
la bride (20) s'étendant radialement est formée par l'évasement de la douille (8) et présente des segments de paroi (21, 22) s'étendant transversalement à l'axe longitudinal de soupape et qui s'appuient l'un contre l'autre pour l'essentiel sans espace.

2. Soupape selon la revendication 1,
**caractérisée en ce que**
la douille (8) présente un fond (13) dans lequel une ouverture (12) coaxiale avec l'axe longitudinal de soupape forme un siège de soupape (11), tandis qu'un passage (29) servant d'admission ou d'échappement de soupape est disposé entre le fond (13) et la bride (20) côté périphérie de la douille (8).

3. Soupape selon la revendication 2,
**caractérisée en ce que**
sur le segment de la douille (8) côté fond est placé un élément filtrant (25) en forme de gobelet qui présente des ouvertures de filtre (26) côté périphérie et respectivement un collet annulaire (27, 28) côté bride et côté fond de douille, dont le collet annulaire (27) côté bride s'applique sur la douille (8) entre le passage (29) et la bride ainsi que sur la paroi périphérique (30) de l'alésage de bloc de soupape (4), tandis que l'autre collet annulaire (28) est hydrauliquement étanche sur le fond (13) de la douille (8) ainsi que sur le fond (14) de l'alésage de bloc de soupape (4), dans lequel débouchent des canaux (31, 32) du bloc de soupape (5) conducteurs de fluide communiquant côté fond avec l'ouverture (12) de la douille (8) et côté périphérie avec le passage (29).
